# EUROPEAN PATENT SPECIFICATION

(11) **EP 1 628 052 B1**
(45) Date of publication and mention of the grant of the patent: **31.03.2010**
(21) Application number: 05012400.7
(22) Date of filing: 09.06.2005
(51) Int. Cl.: F16J 15/32

(54) **Lip-type end-face sealing device**
Wellendichtring
Joint d'étanchéité de roulement

(30) Priority: 09.07.2004 JP 2004202684
(43) Date of publication of application: 22.02.2006
(60) Divisional application: 06025068.5
(73) Proprietor: Carl Freudenberg KG, 69469 Weinheim (DE)
(72) Inventor: Nakagawa, Takehiro c/o NOK Corporation, Fukushima-shi Fukushima 960-1193 (JP); Sato, Akihiro c/o NOK Corporation, Fukushima-shi Fukushima 960-1193 (JP); Tasaki, Tetsuo c/o NOK Corporation, Fukushima-shi Fukushima 960-1193 (JP); Takahashi, Hiromi c/o NOK Corporation, Fukushima-shi Fukushima 960-1193 (JP); Hoshi, Junya c/o NOK Corporation, Fukushima-shi Fukushima 960-1193 (JP); Okubo, Hiroshi c/o NOK Corporation, Fukushima-shi Fukushima 960-1193 (JP); Anzai, Masahiro c/o NOK Corporation, Fukushima-shi Fukushima 960-1193 (JP)

(56) References cited:
- WO-A-90/08273
- DE-C1- 19 841 099
- GB-A- 1 489 801
- JP-U- 6 049 856
- US-A- 4 531 747
- US-A- 5 009 435
- US-A- 5 653 448
- US-B1- 6 257 587
- US-B1- 6 561 519
- PATENT ABSTRACTS OF JAPAN vol. 2003, no. 12, 5 December 2003 (2003-12-05) & JP 2003 287142 A (NOK CORP), 10 October 2003 (2003-10-10)

## Description

The present invention relates to a lip-type end face sealing device having seal lips adapted to be made into close contact with an end face so as to effect sealing.

From JP 06 049 856 U there is known a typical conventional technology relating to a sealing device for sealing between an engine oil and a clutch oil in an wet-type engine.

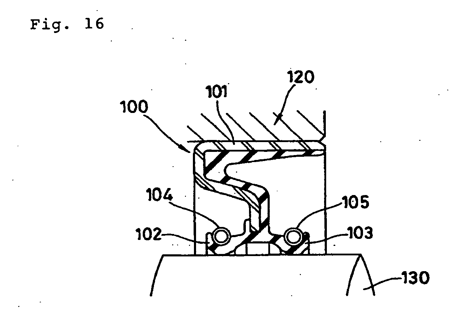

Referring to there is shown Fig. 16 a partly sectioned view which shows a conventional sealing device 100 similar to that disclosed in 9 5 of JP 06 049 856 U. This sealing device 100 has a pair of radial seal lips 102, 103 in an annular metal case 101 press-fitted in an inner circumferential surface of a housing 120, which are made of a rubber-like elastic material and facing in axially opposite directions from each other, and extension springs 104, 105 fitted on the outer circumferences thereof, for applying a urging force to a rotary shaft 130. The first radial seal lip 102 is adapted to seal engine oil and the second radial seal lip 103 is adapted to seal clutch oil.

However, the sealing device 100 shown in Fig. 16 has a sealing service life which is not so long since the radial seal lips 102, 103 are worn being caused by the urging force applied to the rotary shaft 130. Further, should the sealing device be fitted being slightly eccentric from the rotary shaft 130, the slide surface pressures of the seal lips 102, 103 against the rotary shaft 130 would be locally decreased or gaps would be caused, resulting in a risk of mixing of different kinds of liquids which are held on axially opposite sides. Further, in the case of externally fitting the sealing device on the rotary shaft 130, close attention should be taken in order to prevent the radial seal lips 103, 103 from being damaged.

Further, in view of the above-mentioned standpoints, these years, there has been presented such a tendency that an end face sealing type end face sealing device is alternatively be used, having seal lips which are made into slide contact with end faces of slingers perpendicular to the center axis of the rotary shaft, as shown in Fig. 1 of JP 06 049 856 U. However, in the case of the end face sealing type, negative pressure is induced in an inner sealing space enclosed by the sliding parts of both seal lips under a centrifugal force during rotation, and accordingly, the seal lips are made into surface-contact with the end face of the slinger, resulting in an increased sliding load. As a result, the sealing ability thereof is deteriorated.

US 6,561,519 B1 relates to a dual sealing device. In this sealing device the seal lips axially spaced from each other are directly brought into contact with the outer circumference of the shaft to be sealed. Slingers or the like are neither provided with this type of seal nor are they indicated in prior art as it reads from JP-U-06 049 856. This is why such a sealing device is structurally different from the sealing device in accordance with the invention in which sealing occurs between flanged portions of slingers suitably arranged on a shaft to be sealed. It is only with such a structure of a sealing device that a seal inner space is formed, and which is defined and enclosed by the seals and the assigned flange surfaces and the slingers. By contrast, in prior art as it reads from US-6,561,519 B1 the space between the two seal lips contacting the shaft communicates with the environment, where necessary.

The present invention is devised in view of the above-mentioned problems, and accordingly, an object of the present invention is to provide a lip-type end face sealing device which is excellent in sealing ability and durability.

According to the present invention there is provided a lip type end face sealing device as set out in claim 1.

Further preferred embodiments of the present invention are subject matters of the claims 2 and 3.

With the lip type sealing devices according to the invention, since the seal lip is made into close contact with the flange part of the slinger, a load caused by sliding is small, and further, since the pressure in the seal inner space between the sliding parts of both seal lips and both slingers is released through the ventilation passage, no negative pressure is effected in the space so as to prevent the seal lips from being made into surface contact with the slingers, thereby it is possible to maintain an excellent sealing ability for a long time.

With the lip type end face sealing device according to claim 3, the spiral grooves effect pumping action caused by rotation of the slinger so as to expel a liquid to be sealed which tends to enter from the outer circumferential side into the sliding portion between the seal lip and the slinger, thereby it is possible to remarkably enhance the sealing ability.

### BRIEF DESCRIPTION OF THE DRAWINGS

Fig. 1 is a partly sectioned view illustrating a lip type end face sealing device in a fitted condition in a first embodiment of the present invention, the lip type end face sealing device being sectioned along a plane passing through the center axis;
Fig. 2 is a partly sectioned view illustrating the lip type end face sealing device in an unfitted condition in a first embodiment of the present invention, the lip type end face sealing device being sectioned along a plane passing through the center axis;
Fig. 3 is a partly sectioned view illustrating a lip type end face sealing device being sectioned along a plane passing through the center axis;
Fig. 4 is a partly sectioned view illustrating a lip type end face sealing device being sectioned along a plane passing through the center axis;
Fig. 5 is a partly sectioned view illustrating a lip type end face sealing device being sectioned along a plane passing through the center axis;
Fig. 6 is a partly sectioned view illustrating a variant form of the lip type end face sealing device being sectioned along a plane passing through the center axis;
Fig. 7 is a partly sectioned view illustrating a variant form of the lip type end face sealing device being sectioned along a plane passing through the center axis;
Fig. 8 is a partly sectioned view illustrating a lip type end face sealing device being sectioned along a plane passing through the center axis;
Fig. 9 is a partly sectioned view illustrating a variant form of the lip type end face sealing device of Fig. 8 being sectioned along a plane passing through the center axis;
Fig. 10 is a view as viewed in the direction of the arrow X in Fig. 9;
Fig. 11 is a partly sectioned view illustrating another variant form of the lip type end face sealing device of Fig. 8 being sectioned along a plane passing through the center axis;
Fig. 12 is a partly sectioned view illustrating further another variant form of the lip type end face sealing device of Fig 8 being sectioned along a plane passing through the center axis;
Fig. 13 is a partly sectioned view illustrating a dust cover shown in Fig. 12, the dust cover being sectioned along a plane passing through the center axis;
Fig. 14 is a partly sectioned view illustrating a lip type end face sealing device being sectioned along a plane passing through the center axis;
Fig. 15 is a partly sectioned view illustrating a lip type end face sealing device being sectioned along a plane passing through the center axis; and
Fig. 16 is a partly sectioned view illustrating a conventional lip type end face sealing device.

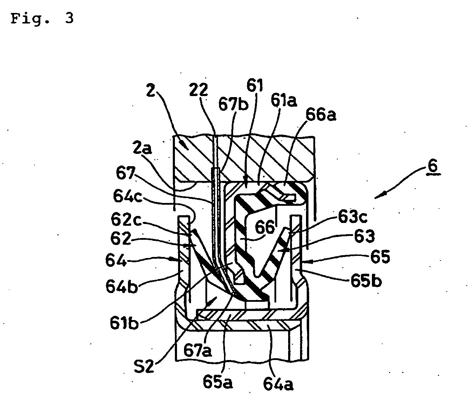

The Figs. 3 to 15 do not belong to the present invention as claimed herewith.

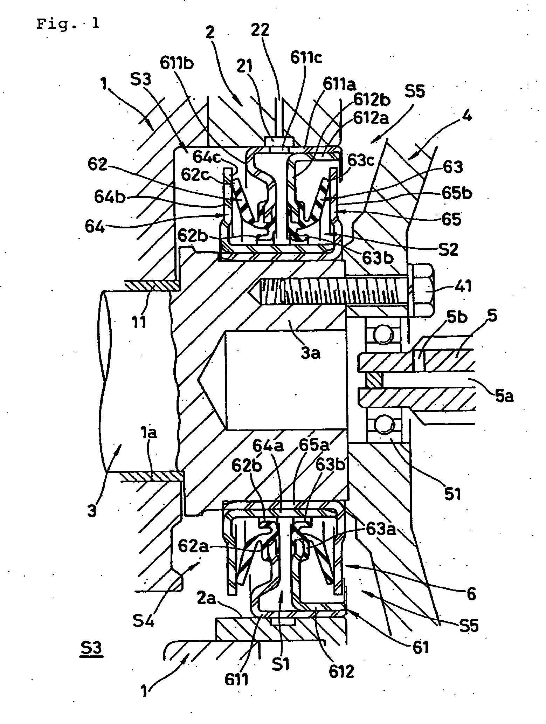

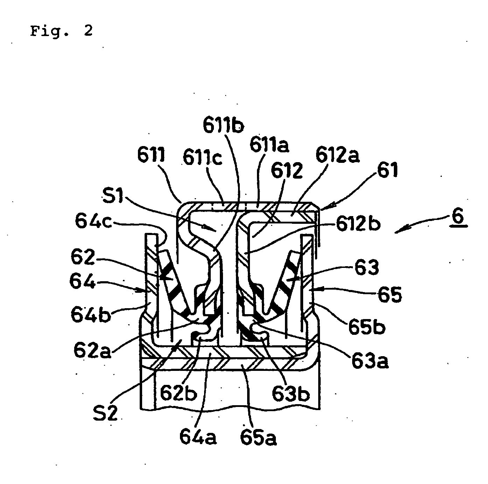

Fig. 1 is a sectional view illustrating a lip type end face sealing device according to the present invention in a preferred first embodiment which is applied as a sealing means between engine oil and clutch oil in a wet type engine for construction machinery and which is in a fitted condition, being sectioned in a plane passing through the center axis thereof, and Fig. 2 is a partly sectioned view illustrating the lip type end sealing device in an unfitted condition, being sectioned along the center axis thereof.

Referring at first to Fig. 1, there are shown a crank casing 1 of the wet type engine, a housing 2 attached to an outer circumference of an opening of a shaft hole 1a in the crank casing 1, a crank shaft 3 inserted through the shaft hole 1a in a substantially horizontal direction, and rotatably journalled by a bearing 11, a flywheel 4 attached to a rear end part 3a of the crank shaft 3 by means of bolts 41 and a transmission shaft 5 having one end which is rotatably supported in the inner circumference of the flywheel 4 through the intermediary of a bearing 51. The crankshaft 3 corresponds to the rotary shaft stated in claim 1, and a lip type end sealing device 6 of the embodiment of the present invention is fitted between an inner circumferential surface of the housing 2 and an outer circumferential surface of the rear end part 3a of the crank shaft 3 which is projected from the shaft hole 1 a of the crank casing 1.

The lip type end sealing device 6 comprises an annular case 61 closely fitted in the inner circumferential surface 2a of the housing 2, a pair of seal lips (first and second seal lips) 62, 63 integrally incorporated to an inner circumference of the case 61, and a pair of slingers (first and second slingers) 64, 65 attached to the outer peripheral surface of the rear end part 3a of the crank shaft 3.

As shown in Figs. 1 and 2, the case 61 is composed of a pair of case members (first and second case members) 611, 612 which are press-formed by punching out a metal sheet such as a steel sheet. In detail, the first case member 611 is composed of a fitting cylindrical part 611a press-fitted in the inner peripheral surface 2a of the housing 2 with a predetermined interference, and an inner peripheral flange part 611b extending toward the inner circumference side from one end of the former. Further, the second case member 612 is composed of a fitting cylindrical part 612a press-fitted in an inner peripheral surface of the fitting cylindrical part 61 a of the first case member 611 in a close contact condition, and an inner circumferential flange part 612b extending toward the inner circumference side from one end of the former. A radially extending ventilation space S1 is defined between the inner flange parts 611 a and 612b, and a fitting part of the fitting cylindrical part 611 a of the first flange part 611 into which the fitting cylindrical part 612a of the second flange part 612 is fitted is formed in its inside with a ventilation hole 611c confronting the ventilation passage S1.

The first and second seal lips 61, 62 are made of a rubber-like elastic material, having proximal end parts 62a, 63a are integrally cured and bonded to the inner peripheral flange part 611b, 612b of the first and second case members of the casing 611, 612 in the case 61 so as to surround the inner peripheral parts thereof, and are flared in a taper-like fashion in axially opposite directions from the distal end parts 62a and 63a toward the outer circumference side. Further, tongue parts 62b, 63b are formed on the inner circumference sides of the proximal end parts 62a, 63b, facing in axially opposite directions with respect to each other.

The first and second slingers 64, 65 are press-formed by punching out a metal sheet such as a steel sheet, and have the fitting cylindrical parts 64a, 65a at their inner circumferences, respectively, and the fitting cylindrical parts 64a, 65a are press-fitted in a closely contact condition so as to be integrally incorporated with each other. Further, the fitting cylindrical part 65 of the slinger 65 which is located on the relatively inner circumference side is press-fitted on the outer peripheral surface of the rear end part 3a of the crankshaft 3 with a predetermined interference, in a close contact condition.

The first stringer 64 has a flange part 64b which is positioned on the axially inner side (crank casing 1 side) of the inner circumferential flange part 611b of the first case member 611 in the case 61, and the second slinger 65 has a flange part 65b which is positioned on the axially outer side of the inner circumferential flange part 612b of the second case member 612 in the case 61. Further, the first and second seal lips 62, 63 are made at their end edges 62, 63c which are directed in opposite directions from each other, into close contact with the end faces of the flange parts 64b, 65b which are substantially perpendicular to the center axis, being deformed so as to be slightly bent toward the inner circumferential flange parts 611 b, 612b of the first and second case members 611, 612.

A plurality of spiral grooves 64c (for example, four grooves) which exhibit pumping action for pressing a fluid outward through rotation are formed in the sliding surface of the flange part of the first slinger 64 which is made into slidable contact with the first seal lip 26. Further, although the sliding surface of the flange part 65b of the second slinger 65 which is made into slidable contact with the second seal lip 63 is smooth in this embodiment, it may be formed therein with spiral grooves which are symmetric with the spiral grooves 64c in the first stringer 64 so as to exhibit pumping action for pressing a fluid outward during rotation.

The first seal lip 62 is integrally incorporated with the first case member 611, simultaneously with the curing and molding in such a manner that the first case member 61 having the inner circumferential flange part 611 b coated thereover with a curing adhesive is set in predetermined dies (which is not shown), and then an uncured rubber material to be molded is filled in an annular cavity which is defined in the closed dies so as to extend from the circumference of the inner circumferential flange 611b, and is then heated and pressurized. The second seal lip 63 is integrally molded with the second case member 612, similar to the first seal lip 62. After the molding, the fitting cylindrical part 611 a of the first case member 611 is press-fitted thereinto with the fitting cylindrical part 612a of the second case member 612 so as to assemble the case 61 with the first and second case members 611, 612 being integrally incorporated. Further, the first and second slingers 64, 65 are press-fitted in the fitting cylindrical parts 64a, 65a from axially both sides so as to be integrally incorporated. Thus, the unit shown in Fig. 2 is obtained.

The inner circumferential surface 2a of the housing 2 shown in Fig. 1, is formed therein with an annular groove 21 at an axial position which corresponds to the ventilation hole 611c when the case 6 of the lip type end face sealing device 6 is press-fitted, positioned and secured, and the vent hole 22 is opened to a circumferential part of the annular groove 21. The ventilation space S1, the ventilation hole 611c, the ventilation groove 21 and the vent hole 22 constitute a ventilation passage stated in claim 1. That is, in a fitted condition shown in the figure, a seal inner space S2 between the sliding parts of the first and second seal lips 62, 63 and the first and second slingers 64, 65 is opened to the atmosphere through the ventilation space S1 between the first case member 611 and the second case member 612 of the case 61, the ventilation hole 611 c, the ventilation groove 21 and the vent hole 22.

With the configuration as stated above, a suitable quantity of engine oil (which is not shown) for lubricating the bearing 11 and a piston and the like in the engine is reserved in the lower section of a crank chamber S3 in the crank casing 1 while clutch oil (which is not shown) which is fed into a clutch disc through an inner circumferential hole 5a of the transmission shaft 5 and an injection port 5b is reserved in an inner chamber (on the right side in Fig. 1) of the housing 2. Further, the lip type end face sealing device 6 is adapted to seal these oils so that the engine oil which scatters in the crank chamber S3 and the clutch oil which scatters in the housing are prevented from being mixed with each other around the rear end part 3a of the crank shaft 3.

In detail, during rotation of the crank shaft 3, the flange parts 64a, 65a of the first and second slingers 64, 65 which are rotated, integral with the crank shaft 3, are made into close and slidable contact with the end edges 62c, 63c of the first and second seal lips 62, 63 which are fixed to the housing 2 side through the intermediary of the case 61 (the first case member 611 and the second case member 612) and which are nonrotatable. Further, the engine oil having come to a space S4 between the lip type end face sealing device 6 and the crank casing 1 is expelled toward the outer circumference side under a centrifugal force caused by rotation of the flange part 65b even though it has such a tendency as to pass toward the inner circumference side through the sliding portion between the flange part 64b of the first slinger 64 and the first seal lip 62. Similarly, splash of the clutch oil having come to a space S5 between the lip type end face sealing device 6 and the flywheel 4 is expelled toward the outer circumference side under a centrifugal force caused by rotation of the flange part 65b even though it has such a tendency as to pass toward the inner circumference side through the sliding portion between the flange part 65b of the second slinger 65 and the second seal lip 63.

It is noted here that the quantity of engine oil having comes to the space S4 from the crank chamber S5 is much larger than that of the clutch oil scattering into the space S5. However, between the sliding parts of the flange part 64b of the first slinger 64 and the first seal lip 62, the spiral grooves 64c formed in the flange part 64b exhibits pumping action caused by rotation of the first linger 64, for expelling a fluid toward the outer circumference side, thereby it is possible to exhibit an excellent sealing ability in cooperation with a centrifugal force caused by rotation of the flange part 64b.

Further, air present in the seal inner space S4 in the lip type end face sealing device 6 is expelled from the sliding portion between the flange part 64b of the first slinger 64 and the first seal lip 62 toward the outer circumference side by the pumping action caused by the spiral grooves 64c and the centrifugal force, and the centrifugal force in the sliding portion between the flange part 65b of the second slinger 65 and the second seal lip 63, but since the seal inner space S2 is opened to the atmosphere by way of the ventilation space S2 between the first case member 611 and the second case member 612 of the case 61, the ventilation hole 611c, the ventilation groove 21 and the vent hole 22, no negative pressure is effected therein. Accordingly, the first and second seal lips 62, 63 are prevented from being made into surface contact with the flange parts 64b, 65b of the first and second slingers 64, 65 due to a negative pressure. Further, the first and second seal lips 62, 63 are made into close contact with the first and second slingers 64, 65 by an axially bending reaction force and accordingly, their surface pressures are low. Thus, it is possible to effectively prevent increase in sliding load, and early abrasion of the first and second seal lips 62, 63 or the like caused thereby.

Incidentally, if engine oil or clutch oil in a slight quantity enters from the upper half parts of the sliding portions between the flange parts 64b, 65b of the first and second slingers 64, 65 and the first and second seal lips 62, 63 toward the inner circumference side, the leaking liquid is pushed back toward the outer circumference side by the centrifugal force and the pumping action on the flange part 64b, 65b side, but if flows downward on the upper half parts of the first and second seal lips 62, 63 along the taper-like surfaces thereof, and is received by the tongue parts 62b, 63b. Further, this leaking liquid flows to the lower half parts along the circumferential grooves between the tongue parts 62b, 63b and the first and second seal lips 62, 63, and then is dropped downward, that is, toward the outer circumference side along the taper-like outer surface of the lower half parts of the first and second seal lips 62, 63. Accordingly, it is pushed back toward the outer circumference side from the sliding portions between the flange parts 64b, 65b under the centrifugal force and the pumping action.

Next, Fig. 3 is a partly sectioned view which shows a lip type end face sealing device which is applied as a seal means between engine oil and clutch oil in a wet type engine for construction machinery or the like, the lip type end face sealing device being sectioned along a plane passing through the center axis. That is, this lip type end face sealing device 6 comprises an annular case 61 close fitted in an inner circumferential surface 2a of a housing 2, a pair of seal lips (first and second seal lips) 62, 63 integrally incorporated with an inner circumference of the casing 61, a pair of slingers (first and second slingers) 62, 63 attached to the outer circumferential surface of the rear end part of the crank shaft which is not shown.

The case 61 is press-formed by punching a metal sheet such as a steel sheet, having a fitting cylindrical part 61 a closely press-fitted in the inner circumferential surface 2a of the housing 2 with a predetermined interference, and an inner circumferential flange part 61 b extending from one end part of the former.

The first and second seal lips 62, 63 are molded from a rubber-like elastic material, are connected to each other through a proximal end part 66 which is commonly owned thereby, and are flared facing in axially opposite directions to each other. Further, the proximal end part 66 is integrally cured and bonded to the case 61, having its outer circumferential part which goes around the outer circumference side of the fitting cylindrical part 61 a of the case 61 so as to constitute a gasket part 66a made into close contact with the inner circumferential surface 2a of the housing 2 with a predetermined squeezing margin.

The first slingers 64, 65 are similar to those in the embodiment which has been explained hereinabove and shown in Figs. 1 and 2. Accordingly, the sliding surface of the flange part 64b of the first slinger 64 which is made into slidable contact with the first seal lip 62, is formed therein with a plurality of spiral grooves (for example, four grooves) 64c which exhibits, through rotation, pumping action for pushing out a fluid toward the outer circumference side. Even though, in this embodiment, the sliding surface of the flange part 65b of the second slinger which is made into slidable contact with the second seal lip 63 is smooth, it may also be formed therein with spiral grooves symmetric with the spiral grooves 64c of the first slinger 64.

The first and second seal lips 62, 63 have end edges 62c, 63c which face in axially opposite directions from each other, are made into close contact with the flange parts 64b, 65b of the first and second slingers 64, 65 which are substantially perpendicular to the center axis, being deformed so as to be slightly bent toward the inner circumferential flange parts 611 b, 612b of the first and second case member 611, 612.

A ventilation tube 67 is inserted in the inner circumference part of the proximal end part of the first and second seal lips 62, 63, the outer circumferential surface of the ventilation tube 67 and the distal end part 66 being joined together in a seal-tight manner. The ventilation tube 67 has one end 67a which is opened at the inner circumferential surface of the distal end part 67 and the other end 67b is connected in a close contact manner to the vent hole 22 opened to at the inner circumferential surface 2a of the housing 2. That is, in the fitted condition of the lip type end face sealing device 6, a seal inner space S2 between sling parts of the first and second seal lips 62, 63 and the flange parts 64b, 65b of the first and second slingers 64, 65 is opened to the atmosphere by way of the ventilation tube 67 and the vent hole 22.

Also with the lip type end face sealing device 6 having the above-mentioned configuration the case 61 is fitted in the inner circumferential surface 2a of the housing 2, and the first slinger 64 and the second slinger 65 are fitted on the outer circumferential surface of the rear end part 3a of the crank shaft 3 so as to effect sealing in sliding portions between the first and second seal lips 62, 63 and the first and second slingers 64, 65 so as to prevent engine oil in the crank chamber S3 and clutch oil scattering in the housing 2 from being mixed with each other around the rear end part 3a of the crank shaft 3.

Further, also in this case, engine oil having come into the sliding portion between the first seal lip 62 and the flange part 64b of the first slinger 64 is expelled toward the outer circumference side under a centrifugal force caused by rotation of the flange part 64b and the pumping action by the spiral grooves 64c, and splash of clutch oil having come into the sliding portion between the second seal lip 63 and the flange part 65b of the second slinger 65 is expelled under centrifugal force caused by rotation of the flange part 65tb.

Further, since the seal inner space S2 between the sliding parts of the first and second seal lips 62, 63 and the flange parts 64a, 65 of the first and second slingers 64, 65 is opened to the atmosphere by way of the ventilation tube 67 and the vent hole 22, no negative pressure is effected therein due to the pumping action and the centrifugal force induced in the sliding portion between the flange part 64b of the first slinger 64 and the first seal lip 64 and the centrifugal force induced in the sliding portion between the flange part 65b of the second slinger 65 and the second seal lip 63. Accordingly, it is possible to prevent the first and second seal lips 62, 64 from being made into surface contact with the flange parts 64b, 65b of the first and second slingers 64, 65 by the negative pressure, and further, the first and second seal lips 62, 63 are made into close contact with the flange parts 64b, 65b with an axial reaction force so that the surface pressure thereof is low, thereby it is possible to effectively prevent an increase in sliding load, early ablation of the first and second seal lips caused thereby.

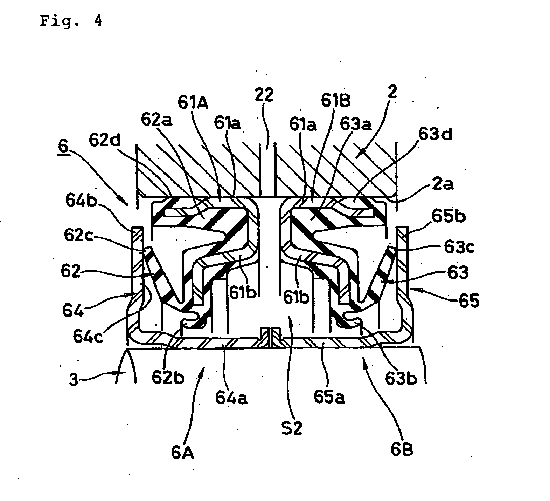

Although the first and second seal lips 62, 63 are integrally incorporated with each other while the first and second slingers 64, 65 are fitted together so as to be integrally incorporated with each other in the afore-mentioned first embodiment shown in Figs. 1 and 2 and the design shown in Fig. 3, the first seal lip 62 and the first singer 63 for sealing engine oil may be separated from the second seal lips 63 and the second slinger 65 for sealing clutch oil, respectively. Fig. 4 is a partly sectioned view of a lip type end face sealing device being sectioned along a plane passing through the center axis.

That is, the lip type end face sealing device 6 is composed of a pair of end face seals 6A, 6B of which the first end face seal 6A comprises an annular case 61A closely fitted in the inner circumferential surface 2a of the housing 2, near to the crank casing (on the left side in Fig. 4), a seal lip 62 integrally incorporated with the case 61A, and a first slinger 64 fitted on the outer circumferential surface of the rear end part of the crank shaft 3, near to the crank casing (on the left side in Fig. 4). The second end face seal 6B is similar to the first end face seal 6A, that is, it comprises an annular case 61 B closely fitted in the inner circumferential surface 2A of the housing 2, near to the flywheel (on the right side in Fig. 4), a seal lip 63 integrally incorporated with the annular case 61A, and a second slinger 65 closely fitted on the outer circumferential surface of the rear end part of the crank shaft 3, near to the flywheel (on the right side in Fig. 4).

The cases 61A, 61 B are press-formed by punching out a metal sheet such as a steel sheet, each having the fitting cylindrical part 61 a press-fitted in the inner circumferential surface 2a of the housing 2 with a predetermined interference, and an inner circumferential flange part 61 b extended toward the inner circumference side from the one end of the former. Both inner circumferential flange parts 61b are spaced from each other, facing in opposite directions from each other.

The first seal lip 62 of the first end face seal 6A is made of a rubber-like elastic material, and is flared in a taper-like fashion, facing toward the crank casing (on the left side in Fig. 4). The first seal lip 62 has a distal end part 62a is integrally cured and bonded to the case 61A, the outer circumferential part of the distal end part 62a is extended around the outer circumference side of the fitting cylindrical part 61 a of the case 61A so as to form a gasket part 6d which is made into close contact with the inner circumferential surface 2a of the housing 2 with a predetermined squeezing margin. Further, a tongue 62b facing toward the crank casing (on the left side in Fig. 4) is formed in the inner circumference of the distal end part 62a.

The second seal lip 63 in the second end face seal 6B is similar to the first seal lip 62, but it is arranged, symmetric to the first seal lip 62, that is, it is flared in a taper-like fashion, facing toward the flywheel (on the right side in Fig. 4). The second seal lip 63 has a proximal end part 63a which is integrally cured and bonded to the case 61B, and the outer circumferential part of the proximal end part 63a is extended around the outer circumference side of the fitting cylindrical part 1a of the case 61 B so as to form a gasket part 63 which is made into close contact with the inner circumferential surface 2a of the housing 2 with a predetermined squeezing margin. Further, a tongue 63b facing toward the flywheel (on the right side in Fig. 4) is formed in the inner circumference of the distal end part 63a.

The first slinger 64 in the first end face seal 6A is press-formed by punching out a metal sheet such as a steel sheet, having a fitting cylindrical part 64a which is press-fitted in a close contact condition on the outer circumferential surface of the rear end part of the crank shaft 3 with a predetermined interference, and the first seal lip 62 is made at its outer circumferential edge 62c into contact with the flange part 64 which is substantially perpendicular to the center axis, being deformed so as to be slightly bent toward the inner circumferential flange part 61 b of the case 61A. The sliding surface of the flange part 64b of the first slinger 64 which is made into slidable contact with the first seal lip 63, is formed therein a plurality of spiral grooves (for example, four grooves) 64c which exhibit upon rotation pumping action for pushing out a fluid toward the outer circumference side.

Meanwhile, the second slinger 65 in the second end face seal 6A is similar to the first slinger 64, that is, it is press-formed by punching out a metal sheet or a steel sheet, having a fitting cylindrical part 65a which is press-fitted in a close contact condition on the outer circumferential surface of the crank shaft 3 with a predetermined interference. The second slinger 65 is arranged, symmetric to the first slinger 64, and the second seal lip 63 is made at its outer circumferential end edge 63c into close contact with the flange part 65b which is substantially perpendicular to the center axis, being deformed so as to be slightly bent toward the inner circumferential flange part 91 b of the case 61 B. Further, the sliding surface of the flange part 65b of the first slinger 65 which is made into slidable contact with the second seal lip 63 is smooth, but it may be formed therein with spiral grooves which are symmetric to the spiral grooves 64c of the first slinger 64.

A vent hole 62 is opened at the inner circumferential surface 2a of the housing 2 at a position between the fitting position of the case 61 A in the first end face seal 6A and the fitting position of the case 61 B in the second end face seal 6B. That is, in the fitted condition of the first end face seal 6A and the second end face seal 6B, an inner seal space S2 between the sliding parts of the first and second seal lips 62, 63 and the first and second slingers 64, 65 is opened to the atmosphere by way of the bent hole 62. Since the seal inner space S2 defined between the first end face seal 6A and the second end face seal 6B is opened to the atmosphere by way of the vent hole 22, no negative pressure is effected in the space S2 due to the pumping action and the centrifugal force which are induced in the sliding portion between the flange part 64b of the first slinger 64 and the first seal lip 63 and the centrifugal force which is induced in the sliding portion between the flange part 65b of the second slinger 65 and the second seal lip 63. Thereby it is possible to effectively prevent an increase in sliding load, and early abrasion of the first and second seal lip caused thereby or the like. Further, the tongues 62b, 63b-have functions similar to those explained in connection with Figs. 1 and 2.

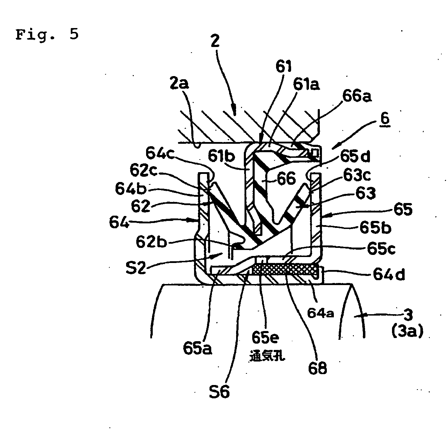

Next, Fig. 5 is a partly sectioned view which shows a lip type end face sealing device which is applied as a sealing means between engine coil and the atmosphere in an engine for construction machinery or the like used in a severe dust environment, the lip type end face sealing device being sectioned along a plane passing through the center axis. That is, the lip type end face sealing device 6 comprises an annular case 61 having a fitting cylindrical part 61 a press-fitted in the inner circumferential surface 3a of the housing 2, a pair of seal lips (first and second seal lips) 62, 63 integrally incorporated with the inner circumference of the case 61, and a pair of slingers (first and second slingers) 84, 65 fitted on the outer circumferential surface of the rear end part of the crank shaft 3. The first seal lip 62 is adapted to seal engine oil on the left side in the figure while the second seal lip 63 is adapted to seal off dust in the atmosphere on the left side in the figure.

The first slinger 64 has a fitting cylindrical part 64a which is press-fitted on the outer circumferential surface of the rear end part 3a of the crank shaft 3 in a close contact condition with a predetermined interference, and has a flange part 64b which is substantially perpendicular to the center axis and which is made into close contact with an end edge 62c of the seal lip 62. Meanwhile, the second slinger 65 having a fitting cylindrical part 65a which is press-fitted on the outer circumferential surface of the fitting cylindrical part 64a of the first slinger 64 with a predetermined interference, near to the crank casing (on the right side in Fig. 5) is formed therein with a holding cylindrical part 65c which is extended from the fitting cylindrical part 64a toward the axially outer side (on the right side in Fig. 5), and a flange part 65b which is substantially perpendicular to the center axis being developed from one end part of the holding cylindrical part 65c.

The first and second slingers 64, 65 are formed in the sliding surfaces of their flange parts 64b, 65b with a plurality of spiral grooves (for example, four grooves) 64c and a plurality of spiral grooves 65c which are symmetric to each other and which effect pumping action for pushing a fluid toward the outer circumference side upon rotation. Further, grease (which is not shown) for lubrication is filled in a sliding portion between the flange part 65b of the second slinger 65 and the second seal lip 63 on the atmospheric side.

The inner circumferential surface of the holding cylindrical part 65c of the second slinger 65 has a diameter which is larger than that of the outer circumferential surface of the fitting cylindrical part 64a of the first slinger 64, and accordingly, a ventilation space S5 is defined between the holding cylindrical part 65c of the second slinger 65 and the fitting cylindrical part 64a of the first slinger 64. Further, the holding cylindrical part 65c is formed therein with a ventilation hole 65e at a position near the fitting cylindrical part 65a, and accordingly, the ventilation space S5 and the ventilation hole 65e constitute a ventilation passage for communicating a seal inner space S2 between sliding parts of the first and second seal lips 62, 63 and the first and second slingers 64, 65, with the atmospheric side (on the right side in Fig. 5). The flange part 65b substantially perpendicular to the center axis is developed from the end part of the holding cylindrical part 6c.

The ventilation space S6 is charged therein with a dust filter 68 which is calked by a calking part 64b formed in an end part of the fitting cylindrical part 64a of the first slinger 64. This dust filter 68 is formed of a fiber assembly such as synthetic fiber fabric or cotton, so as to have high permeability due to micro-gaps among the fibers.

In the lip type end face sealing device having the above-mentioned configuration, the case 61 is fitted in the inner circumferential surface 2a of the housing 2 while the first and second slingers 64, 65 are fitted on the outer circumferential surface of the rear end part 3a of the crank shaft 3, and the sliding portion between the first seal lip 62 and the flange part 64b of the first slinger 64 prevent engine oil in a crank chamber of the engine from leaking outside of the engine while the sliding portion between the second seal lip 63 and the flange part 65b of the second slinger 65 prevents dust in the atmosphere from entering into the crank chamber of the engine. Further, a gap between the inner circumferential surface 2a of the housing 2 and the fitting cylindrical part 61 a of the case 61 is sealed by a gasket part 66a which extends from a proximal end part 66 common to both first and second seal lips 62, 63.

Further, the spiral grooves 64c, 65c formed in the flange parts 64b, 65b effect pumping action for expelling a fluid toward the outer circumference side during rotation, in the sliding portions between the flange parts 64b, 65b of the first and second slingers 64, 65 and the first and second seal lips 62 and 63, and accordingly, in addition to centrifugal forces caused by rotation of the flange parts 64b, 65b, excellent sealing ability is exhibited.

The air presented in the seal inner space S2 in the lip type end sealing device 6 is expelled from the sliding portions between the flange parts 64b, 65b and the first and second seal lips 62, 63 toward the outer circumference side under pumping action and the centrifugal forces, and accordingly, air outside of the engine is sucked into the seal inner space S2 by way of the dust filter 68 in the ventilation space S6 and the ventilation hole 65e. Accordingly, it is possible to prevent the first and second seal lips 62, 63 from being made into surface contact with the flange parts 64b, 65b of the first and second slingers 64, 65 by a negative pressure. Further, since the first and second seal lips 62, 63 are made into close contact with the first and second slingers by their axial bending reaction forces, the surface pressures thereof are low, thereby it is possible to effectively prevent an increase in sling load and early abrasion of the first and second lips 62, 63 caused thereby and the like.

Dust contained in the outside air which is sucked into the seal inner space S2 by way of the ventilation space S6 and the ventilation hole 65e is removed by the dust filter 68 charged in the ventilation space S6, and accordingly, purified air is introduced in the seal inner space S2. Thus, it is possible to prevent dust from entering into engine oil in the crank chamber of the engine from the sliding portion between the flange part 64b of the first slinger 64 and the first seal lip 62.

Further, with this configuration, the dust filter 68 can be prevented from being worn by sliding, in comparison with the one which is interposed between a stationary side and a movable side, and accordingly, no gaps are caused due to eccentricity between the housing 2 and the crank shaft 3. Since the dust filter 68 is formed in a cylindrical shape while the ventilation hole 65e is formed being positioned in the end part of the dust seal, the filtering path length for the air becomes longer, thereby it is possible to obtain an excellent dust removal function. Further the ventilation passage consisting of the ventilation space S6 and the ventilation hole 65e is formed within the lip type end face sealing device 6 alone, thereby it is possible to eliminate the necessity of formation of a vent hole or the like in the housing 2.

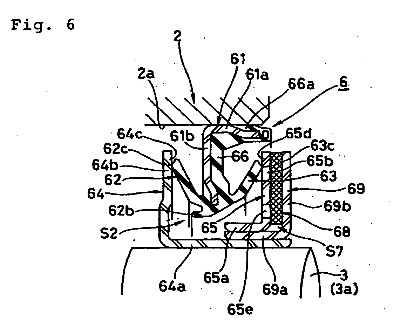

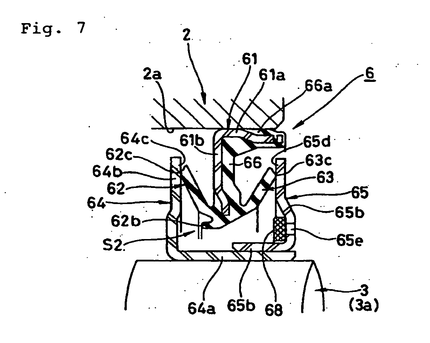

Figs. 6 and 7 are sectional views which show variant forms of the lip type end sealing device shown in Fig. 5, the lip type sealing devices being sectioned along a plane passing through the center axis.

At first, the lip type end face sealing device shown in Fig. 6 comprises, basically similar to that shown in Fig. 5, an annular case 61 press-fitted in the inner circumferential surface 2a of the housing 2, first and second seal lips 62, 63 integrally incorporated with the inner circumference of the annular case 61, and first and second slingers 64, 65 fitted to the crank shaft 3 side. The first seal lip 62 is adapted to seal engine oil on the left side in the figure while the second seal lip 63 is adapted to seal off dust in the atmosphere on the right side in the figure.

An annular holder 69 is press-fitted onto the outer circumferential surface of the fitting cylindrical part 64a of the slinger 64, and the second slinger 65 has the fitting cylindrical part 65a which is press-fitted on the outer circumferential surface 69a of the annular holder 69. The annular holder 69 is press-formed by punching out a metal sheet such as a steel sheet, and similar to the second slinger 65, it has a flange part 69b which is substantially perpendicular to the center axis, which defines a ventilation passage S7 between itself and the flange part 65b of the second slinger 65. Further, the flange part 65b of the second slinger 65 is formed therein with a ventilation hole 65e at a position near to the inner circumference side. The ventilation hole 65e and the ventilation space S7 constitute a ventilation passage through which the seal inner space S2 between the sliding parts of the first and second seal lips 62, 63 and the first and second slingers 64, 65 is communicated to the atmosphere side (on the right side in Fig. 6).

The dust filter 68 is charged in the passage space S7. The dust filter 68 has an annular shape or a disc-like shape which is axially flat, and similar to Fig. 5, is made of a fiber assembly such as synthetic fiber fabric or cotton, and accordingly, has a permeability due to micro gaps among the fibers.

The lip type end face sealing device 6 having the above-mentioned configuration as shown in Fig. 6 exhibits functions basically similar to that in of the device shown in Fig. 5. That is, in association with the discharge of the air from the seal inner space S2 through the sliding portions between the flange parts 64b, 65b of the first and second slingers 64, 65 and the first and second seal lips 62, 63 under the centrifugal force and the pumping action during rotation, the outside air is sucked into the inner seal space S2 by way of the ventilation space S7 between the flange part 69b of the annular holder 69 and the flange part 65b of the second slinger 65, and the ventilation hole 65e, and accordingly, a negative pressure is prevented from being induced in the inner seal space S2, and dust contained in the outside air is removed by the dust filter 68 charged in the ventilation space S7.

Further the dust filter 68 is formed in a disc-like shape, by forming the ventilation hole 65e in the flange part 65b of the second slinger 65 so as to be positioned in the inner circumferential part of the dust filter 68, the air filtering path length becomes longer, thereby it is possible to exhibit an excellent dust removal function, and to eliminate the necessity of formation of a vent hole or the like in the housing 2, similar to the device shown in Fig. 5. Since the dust filter 68 is held between the flange parts 65b and 69b, the dust filter 68 can be prevented from being positionally deviated, or being damaged.

Meanwhile, the lip type end face sealing device 6 shown in Fig. 7 is configured, basically similar to the device shown in Fig. 5, and the first sealing lip 62 is adapted to seal engine oil while the second sealing lip 63 is adapted to seal off dust in the atmosphere.

The fitting cylindrical part 65a of the second slinger 65 is press-fitted on the outer circumferential surface of the fitting cylindrical part 64a of the first slinger 64, and a ventilation hole 65e is formed in the flange part 65b of the second slinger 65. An annular dust filter 68 is provided in the inner surface of the inner circumferential part of the flange part 65b so as to block the ventilation hole 65e. This dust filter 68 is also made of a fiber assembly such as a synthetic fiber fabric or cotton, having a permeability due to micro gaps among the fibers. The dust filter 68 is secured by a suitable adhesive.

The lip type end face sealing device 6 having the above-mentioned configuration shown in Fig. 7 exhibits functions basically similar to the device shown in Fig. 5. That is, in association with the discharge of the air from the seal inner space S2 through the sliding portions between the flange parts 64b, 65b of the first and second slingers 64, 65 and the first and second seal lips 62, 63 under the centrifugal force and the pumping action during rotation by the spiral grooves 64c, 65c, the outside air is sucked into the inner seal space S2 by way of the ventilation hole 65e formed in the flange part 65b of the second slinger 65, and accordingly, a negative pressure is prevented from being induced in the inner seal space S2, and dust contained in the outside air is removed by the dust filter 68 provided in the ventilation hole 65e.

Since the passage through which the pressure in the seal inner space S2 is released to the atmosphere side consists of only the ventilation hole 65e formed in the flange part 65b of the second slinger 65, and since the dust filter 68 is bonded to the flange part 65b of the second slinger 65, the number of components can be reduced, and the configuration can be simplified.

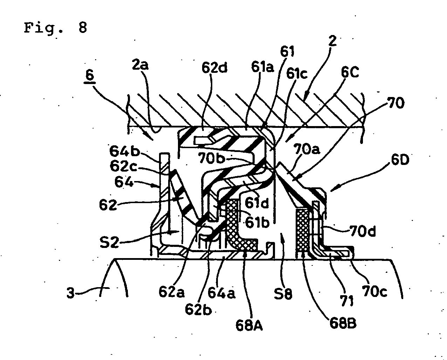

Next, Fig. 8 is a partly sectioned view which shows a lip type end face sealing device being sectioned along a plane passing though the center axis.

This lip type end face sealing device 6 is composed of an end face seal 6C and a dust cover 6D. The end face seal 6C comprises an annular case 61 having a fitting cylindrical part 61 a press-fitted in the inner circumferential surface 2a of the housing 2, a seal lip 62 integrally incorporated with the inner circumference of the annular case 61, a slinger 64 fitted on the outer circumferential surface of the crank shaft 3, and a fist dust filter 68A.

The case 61 in the end face seal 6A is press-formed by punching out a metal sheet such as steel sheet, and is composed of a fitting cylindrical part 61 a press-fitted in the inner circumferential surface 2a of the housing 2 in a close contact condition with a predetermined interference, an outer circumferential flange part 61 c extending toward the inner circumference side from the one end of the former, and an inner circumferential flange part 61 b extended from the inner circumference of the former to the inner circumference side by way of an intermediate part 65d extended from the inner periphery of the former toward the crank casing side (on the left side in Fig. 8).

The seal lip 62 in the end face seal 6C is made of a rubber-like material, and is flared in a taper-like fashion, facing toward the crank casing side (on the left side in Fig. 8), and the proximal end part 62a of the seal lip 62 is integrally cured and bonded to the case 61 while the outer circumferential part of the proximal end part 62a is extended around the outer circumference side of the fitting cylindrical part 61 a of the case 61 so as to form a gasket part 62d which is made into close contact with the inner circumferential surface 2a of the housing 2 with a predetermined squeezing margin. Further, the inner circumferential surface of the distal end part 62a is formed therein with a tongue part 62b facing toward the crank casing, and the outer circumferential flange part 61c of the case 61 which faces toward the atmospheric side (on the right side in Fig. 8) is exposed from a rubber layer extending from the proximal end part 62b of the seal lip 62.

The slinger 64 in the end face seal 6C is press-formed by punching out a metal sheet such as a steel sheet, having a fitting cylindrical part 64a and a flange part 64b which is perpendicular to the center axis and with which the seal lip 62 is made into slidable and close contact, being deformed so as to be slightly flared. The sliding surface of the flange part 64b of the slinger 64 which is made into slidable contact with the seal lip 62 may be formed therein with a plurality of spiral grooves which exhibits pumping action for pushing out a fluid toward the outer circumference side upon rotation.

The first dust filter 68A is attached in the inner circumferential part of the end face seal 6A, being positioned on the atmospheric side of the tongue part 62b. This first dust filter 68A is formed of a fiber assembly such as synthetic fiber fabric or cotton, having a permeability due to micro gaps among the fibers, and being made at its inner circumferential part into slidable contact with the outer circumferential surface of the fitting cylindrical part 64a of the slinger 64.

The dust cover 6D is composed of a dust lip 70 made of a rubber-like elastic material, a reinforcing ring 71 press-formed by punching out a metal sheet such as a steel sheet, and embedded in an inner circumferential proximal end part 70c of the dust lip 70, and a second dust filter 68. The dust lip 70 has a dust lip body 70a which is formed being flared in a taper-like fashion, facing toward the crank casing side (on the left side in Fig. 8), and which has a distal end face 70b made into slidable contact with an end face of the outer circumferential flange part 61c of the case 61 in the end face seal 6C, being suitably deformed so as to be bent, and the inner circumferential proximal end part 70c is closely fitted on the outer circumferential surface of the crank shaft 3, being position on the atmospheric side of the singer 64.

The rubber layer and the reinforcing ring 71 embedded in the former in the inner circumferential part of the dust lip 70 are formed therein with ventilation holes 70d piercing therethrough at one or more of circumferential positions between the lip body part 70a and the inner circumferential proximal end part 70c in the dust cover 6D (dust lip 70). The ventilation holes 70d are adapted to release pressure in the seal inner spaces S2, S8 between the sliding part of the seal lip 62 in the end face seal 6C and the sliding part of the dust lip 70 in the dust cover 6D to the atmospheric side, and correspond to the ventilation passage stated in claim 6, and are formed at one or more of circumferential positions.

The second dust filter 68B is made of a fiber assembly such as a synthetic fiber fabric or cotton, having a permeability due to micro gaps among the fibers, and is formed in an annular shape. Further, it is secured by an adhesive in the inner circumference side of the dust lip 70 so as to block the ventilation hole 70d.

Accordingly, with the above-mentioned configuration, the end face seal 6C is adapted to prevent engine oil in the crank chamber in the engine from leaking to the outside through the sliding portion between the seal lip 62 and the flange part 64b of the slinger 64, and the dust cover 6D is adapted to prevent dust in the atmosphere from entering into the crank chamber in the engine through the sliding portion between the outer circumferential flange part 61c of the case 61 and the dust lip 70.

Further, the air presented in the seal inner space S2 in the end face seal 6C is expelled from the sliding portion toward the outer circumference side under a centrifugal force induced by rotation in the sliding portion between the flange part 64b of the slinger 64 and the seal lip 62 or the pumping action by the spiral grooves, and also, the air presented in the seal inner space S8 between the end face seal 6C and the dust seal 6D is expelled toward the outer circumference side under a centrifugal force induced by rotation in the sliding portion of the dust lip 70. Due to this air expelling action, the outside air is sucked into the seal inner space S8 by way of the ventilation hole 70d and the second dust filter 68B. Further, a part of the air sucked into the seal inner space S8 is sucked into the seal inner space S2 in the end face seal 6C by way of the first dust filter 68A.

The seal lip 62 and the dust seal 70 are prevented from being made into surface contact with the flange part 64b of the slinger 64 and the outer circumferential part 61c of the case 61 by a negative pressure, and further, since the seal lip 62 and the dust lip 70 receive close contact forces only by their axially bending reaction forces, their surface pressures are low, thereby it is possible to effectively prevent an increase in sliding load, early abrasion of the seal lip 62 and the dust lip 70 caused thereby and the like. Further, it is possible to eliminate the necessity of formation of a vent hole or the like in the housing 2 since the ventilation passage can be formed only by the ventilation hole 70d in the dust cover 6D.

Further, dust contained in the outside air sucked into the seal inner spaces S2, S8 is removed by the second dust filter 68B and the first dust filter 68A through the suction of the air, and accordingly, purified air is sucked into the seal inner spaces S2, S8. Thus, it is possible to prevent dust from entering into engine oil in the crank chamber through the sliding portion between the flange part 64rb of the slinger 64 and the seal lip 62.

Although the first dust filter 68A is worn through aging effect due to the sliding between itself and the fitting cylindrical part 64a of the slinger 64 on rotation, since the second dust filter 68B is stationary, it is never worn. Thus, an excellent dust removal function can be maintained.

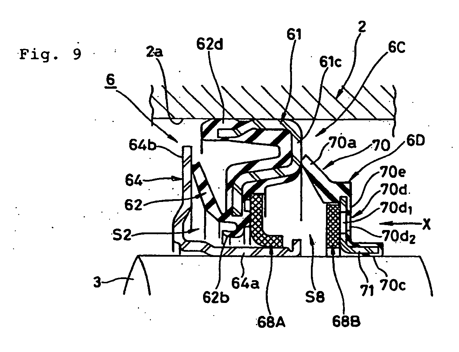

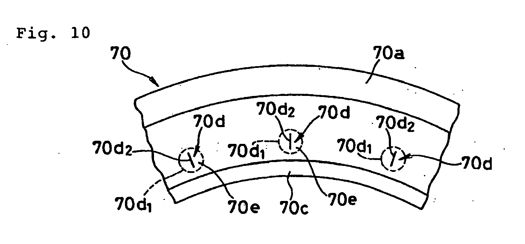

Next, Fig. 9 is a partly sectioned view which shows a variant form of the lip type end face sealing device shown in Fig. 8, as stated above, the lip type end face sealing device being sectioned along a plane passing through the center axis, and Fig. 10 is a view as viewed in the direction of the arrow X in Fig. 9.

This lip type end face sealing device 6 has the same configuration as that shown in Fig. 8, except that the ventilation hole 70d in the dust cover D is formed in a slit-like shape. In detail, a rubber layer constituting the dust lip 70 is formed so as to have a relatively thin membrane like shape in the part which covers the atmospheric side of the reinforcing ring 71, and the ventilation hole 70d has an inner ventilation hole 70d₁ which pierces through the reinforcing ring 71 embedded in the dust cover 6D and which is formed in, for example, a circular hole-like shape as indicated by the broken line in Fig. 10, and an outer hole 70d₂ which pierces through the atmospheric side membrane-like rubber layer 70e, and which is formed in a slit-like shape.

Since the ventilation hole 70d in the dust cover 6D has a slit-like shape in the outer ventilation hole 70d₂ formed in the rubber layer 70e, the outer ventilation hole 70d₂ is normally closed, and accordingly, when the rubber layer is deformed by a differential pressure between the atmospheric pressure and a negative pressure induced in the seal inner spaces S8, S2 the outer ventilation hole 70d₂ is slightly opened. That is, the second dust filter 68B positioned on the inside of the ventilation hole 70d is not always exposed to external dust, thereby it is possible to shut off entrance of dust having a large particle size. Accordingly, in addition to the advantages exhibited by the device shown in Fin. 8, the dust removal function can be further enhanced, and further, it is possible to effect such an advantage that the second dust filter can hardly be clogged.

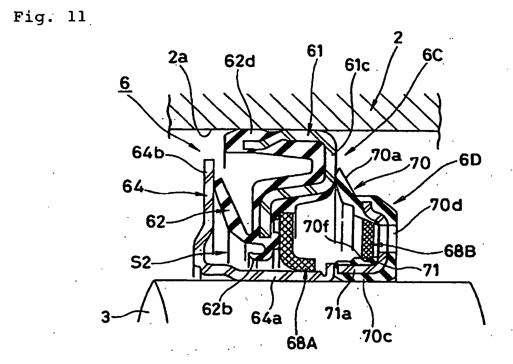

Next, Fig. 11 is a partly sectioned view which shows a variant form of the lip type end face sealing device as shown in Fig. 8, as stated above, the lip type end face sealing device being sectioned along a plane passing through the center axis.

This lip type end face sealing device 6 has a configuration the same as that shown in Fig. 8, except the inner circumferential proximal end part 70c of the dust lip 70 in the dusts cover 6D is directed toward the fitting cylindrical part 64a of the slinger 64 in the end face seal 6C. The inner circumferential proximal end part 70c corresponds to the inner circumferential part of the dust cover stated in claim 9.

In detail, the inner circumferential proximal end part 70c of the dust lip 70 closely fitted on the outer circumferential surface of the crank shaft 3 is extended in a cylindrical shape so as to face toward the fitting cylindrical part 64a together with the inner circumferential part 71 a of the reinforcing ring 71 embedded therein, and the distal end face of the lip body part 70a of the dust lip 70 is made into close contact with the end face of the outer circumferential flange part 61c of the case 61 in the end face seal 6C with a suitable surface pressure when the distal end part abuts against the end part of the fitting cylindrical part 64a. Further, in the end face seal 6c in an unfitted condition, the case 61 (seal lip 62) and the slinger 64 are positioned, relative to each other in the axial direction by a suitable removable auxiliary fixture (which is not shown).

Further, the outer circumferential surface of the inner circumferential proximal distal end part 70c of the dust seal 70 is formed therein with a fitting groove 70f, and the second dust filter 68B is fitted in the fitting groove 70f. That is, the second filter 68B is attached to the inside of the ventilation hole 70d through the fitting between itself and the fitting groove 70f without bonding.

Accordingly, with this configuration, upon the fitting on the outer circumferential surface of the crank shaft 3, the dust cover 6D can be simply positioned so that the distal end face 70b of the dust lip 70 is made into close contact with the outer circumferential flange part 61 c of the case 61 with a suitable surface pressure, by causing the distal end part of the inner circumferential proximal end part 70c of the dust lip 70 in the dust cover 6D to abut against the fitting cylindrical part 64a of the slinger 64.

Further the ventilation hole 70d is configured, similar to the configurations shown in Figs, 9 and 10.

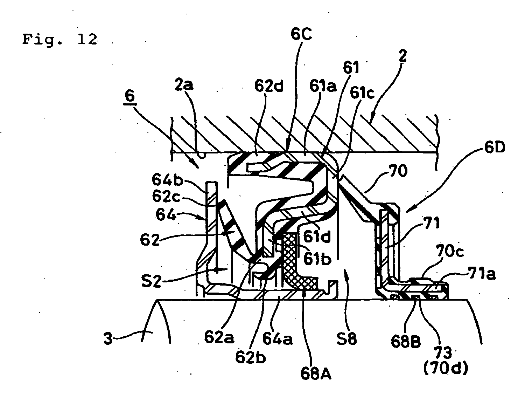

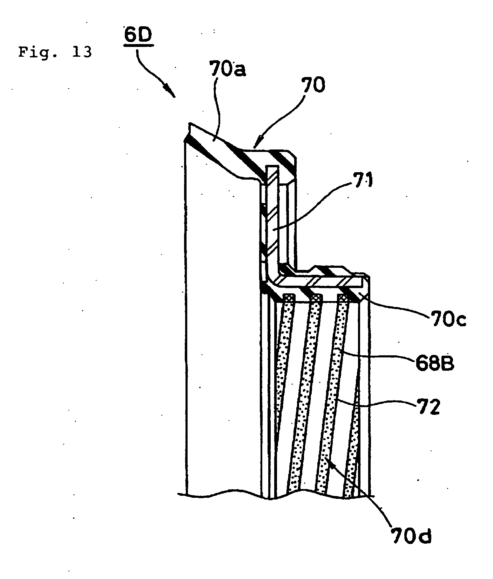

Next, Fig. 12 is a partly sectioned view which shows a further variant form of the lip type end face sealing device shown in Fig. 8, as stated above, the lip type end face sealing device being sectioned along a plane passing through the center axis, and Fig. 13 is a partly sectioned view which shows a dust cover shown in Fig. 12, the dust cover being sectioned along a plane passing through the center axis.

This lip type end face sealing device basically has the same configuration as that shown in Fig. 8, except that the ventilation passage is spirally extended in the fitted part of the inner circumferential proximal end part 70c of the dust cover 6D, which is fitted on the crank shaft 3.

In detail, as shown in Fig. 13, in the dust cover 6D, an inner circumferential proximal end part 70c closely fitted on the outer circumferential surface of the crank shaft 3 is formed in its inner peripheral surface with a groove (which will be referred to as "spiral groove" as shown in Fig. 13) 72 which spirally connect between the atmospheric side end part and the seal inner space S8 side end part, and the spiral groove 72 is charged therein with the second dust filter 68B. The second dust filter 68B is made of a fiber assembly or a felt such as a synthetic fiber fabric or cotton, having a permeability due to micro gaps among the fibers. Further, it is secured by an adhesive.

The end faced seal 6C has a configuration similar to that shown in Fig. 8, and is adapted to prevent engine oil in the crank chamber of the engine from leaking outside of the engine, through the sliding portion between the seal lip 62 and the flange part 64b of the slinger 64. The air presented in the seal inner space S2 in the end face seal 6C is expelled toward the outer circumference side through the sliding portion between the flange part 64b of the slinger 64 and the seal lip 62 under a centrifugal force caused by rotation in the sliding portion between the flange part 64b of the slinger 64 and the seal lip 62 or pumping action by the spiral grooves formed in the sliding portion. Further, the air presented in the seal inner space S8 between the end face seal 6C and the dust cover 6D is also expelled toward the outer circumference side under a centrifugal caused by rotation in the sliding portion in the dust seal 70. Further, due to the above-mentioned air expelling action, the outside air is sucked into the seal inner space S8 by way of the ventilation hole 70d composed of the spiral groove72 and the second dust filter 68B charged therein. Further, a part of the air sucked into the seal inner space S8 is sucked in to the seal inner space S2 in the end face seal 6C by way of the first dust filter 68A.

Accordingly, it is possible to prevent the seal lip 62 and the dust lip 70 from being made into surface contact with the flange part 64b of the slinger 64 and the outer peripheral flange part 61 c of the case 61 by a negative pressure, thereby it is possible to effectively prevent an increase in sliding load, early abrasion of the seal lip 62 cased thereby and the dust lip 70 and the like.

Further, dust contained in the outside air sucked in to the seal inner spaces S8, S2 is removed by the second dust filter 68B and the first dust filter 68A during suction of the air. Further, since the ventilation hole 70d formed in the inner circumferential proximal end part 70c of the dust cover 6D and the second dust filter 68B are extended spirally by a long length, the dust removal effect becomes higher. Accordingly, purified air alone is sucked in the seal inner space S2, thereby it is possible to prevent dust from entering into engine oil in the crank chamber through the sliding portion between the flange part 64b of the slinger 64 and the seal lip 62.

It is noted that since the second dust filter 68B is appropriately compressed by a predetermined interference of the inner circumferential distal end part 70c of the dust cover 6D with respect to the crank shaft 3, it may be made of fibers with a more or less coarse density.

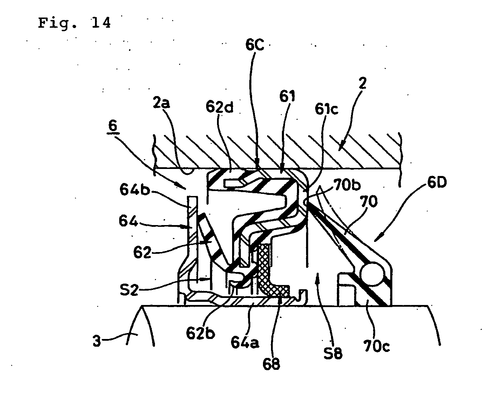

Next, Fig. 14 is a partly sectioned view which shows a lip type end face sealing device which is applied as a sealing means between engine oil and the atmospheric air in an engine used in a sever outside dust environment, and an end face seal 6C has a configuration similar to that shown in Fig. 8.

The dust cover 6D is formed in an annular shape and made of a rubber-like elastic material, similar to the seal lip 62, having an inner circumferential surface of a thick wall distal end part 70 which is closely fitted on the outer circumferential surface of the crank shaft 3 on the atmospheric side from the fitting cylindrical part 64a of the slinger 64, and a distal end face 70b of the dust lip 70 which is flared in a taper-like fashion, facing toward the end face seal 6C, is made into slidable and close contact with the end face of the outer circumferential flange part 61c of the case 61 in the end face seal 6C.

The dust cover 6D rotated together with the crank shaft 3 is exerted thereto with a centrifugal force caused by rotation so that the dust lip 70 is deformed to enlarge its diameter. Further, the rigidity and the mass of the dust seal lip 70 are set so that, at a speed higher than a predetermined rotational speed, the distal end face 70b of the dust lip 70 which is deformed to enlarge its diameter due to increase in centrifugal force is separated from the end face of the outer circumferential flange part 61 c of the case 61 in the end face seal 6C, as indicated by the one-dot chain line in Fig. 14.

With the configuration as stated above, the end face seal 6C is adapted to prevent engine oil in the crank chamber in the engine from leaking outside the engine, similar to that shown in Fig. 8. It is noted here that a centrifugal force which acts to deform the dust lip 70 of the dust cover 6D rotated together with the crank shaft 3, so as to enlarge the diameter of the dust lip 70, is small, and a centrifugal force acting upon the air in the seal inner spaces S2, S8 is also small. Thus, no such a large expelling force as to forcibly open the seal lip 62 and the dust lip 70 is induced, and accordingly, the seal lip 70 is made into close and slidable contact with the end face of the outer circumferential flange part 61 c of the case 61 in the end face seal 6C, thereby the entrance of dust from the atmospheric side is shut off.

Further, if the rotational speed of the crank shaft 3 is increased from the above-mentioned condition, although the air expelling force caused by the centrifugal force acting upon the air and the pumping action of the spiral grooves formed in the slide portion between the seal lip 62 and the flange part 64b of the slinger 64, becomes large, since the centrifugal force acting upon the dust lip 70 of the dust cover 6D which is rotated together with the crank shaft 3, is also increased, the dust lip 70 is deformed as indicated by the one-dot chain line in Fig. 14 so as to cause the distal end face 70b to slightly separate from the end face of the outer circumferential flange part 61 c of the case 61 in the end face seal 6C, thereby it is possible to prevent a negative pressure from inducing in the seal inner spaces S2, S8. Thus, it is possible to prevent the seal lip 62 and the dust lip 70 from being made into surface contact with the flange part 64b of the slinger 64 and the outer circumferential flange part 61c of the case 61 due to a negative pressure. Thus, it is possible to effectively prevent an increase in sliding load, early abrasion of the seal lip 62 and the dust lip 70 cased thereby and the like.

Further, in the case of this condition, the outside air is sucked into the seal inner space S8 through a slight gap defined between the distal end face 70b of the dust lip 70 and the outer circumferential flange part 1c of the case 61, and is then sucked into the seal inner space S2 in the end face seal 6D, and accordingly, dust in the air is removed from the dust filter 68. Accordingly, since purified air alone is sucked into the seal inner space S2, it is possible to prevent dust from entering into engine oil in the crank chamber through the sliding portion between the flange part 64b of the slinger 64 and the seal lip 62.

Incidentally, in order to ensure the above-mentioned operation for the dust lip 70, weights for increasing a diameter enlarging force under centrifugal force may be embedded in the outer circumferential part of the dust lip 70 at equal intervals in the circumferential direction. Alternatively, thin wall parts for readily enlarging the diameter of the dust lip 70 may be formed in the dust lip 70 at equal intervals in the circumferential direction.

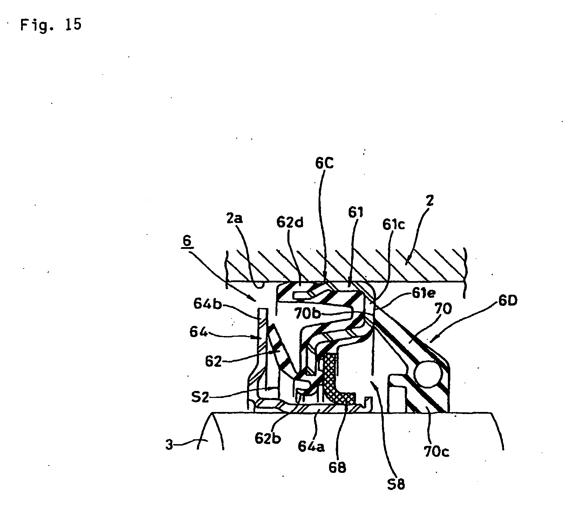

Next, Fig. 15 is a partly sectioned view which shows a lip type end face sealing device, adapted to be applied as a sealing means between engine oil and the atmospheric air in an engine used in a severe environment, the lip type end face sealing device being sectioned along a plane passing through the center axis, and an end face seal 6C has a configuration similar to that shown in Fig. 8.

The dust cover 6D is basically similar to that shown in Fig. 14, that is, the inner circumferential surface of a thick wall proximal end part 70 is closely fitted on the outer circumferential surface of the crank shaft, being off from the fitting cylindrical part 64a of the slinger 64 toward the atmospheric side, an the distal end face 70b of the dust lip 70 which is flared in a taper-like fashion, facing toward the end face seal 6C, is made into slidable and close contact with the end face of the outer circumferential flange part 61 c of the case 61 in the end face seal 6C. Further, the dust seal 70 has a sufficiently thick wall in comparison with that shown in Fig. 14, as stated above, and accordingly, its sliding width on the end face 61 e of the outer circumferential flange part 61 c of the case 61 in the end face seal 6C, or, in other words, the diametrical width of the distal end face 70b of the dust lip 70 is relatively large.

Of the end face 61e of the outer circumferential flange part 61c of the case 61 in the end face seal 6C and the distal end face 70b of the dust lip 70 which is made into slidable contact with the former, either one or both is surface-roughened by a satin treatment. Thus, an unlimited number of fine ventilation passages (which are not shown) which are labyrinth-like are defined between the end face 61e and the distal end face 70b which are made into contact with each other.

With the configuration as stated above, similar to that shown in Fig. 8, the end face seal 6C is adapted to prevent engine oil in the crank chamber of the engine from leaking outside of the engine through the sliding portion between the seal lip 62 and the flange part 64b of the slinger 64, and accordingly, the air presented in the seal inner space S2 is expelled toward the outer circumference side from the sliding portion under a centrifugal force caused by rotation in the sliding portion between the flange part 64b of the slinger 64 and the seal lip 62 or the pumping action by the spiral grooves formed in the sliding portion. However, the seal inner space S2 is opened to the atmosphere by way of the unlimited number of fine ventilation passages which are labyrinth-like and which are formed in the sliding portion between the end face 61e of the outer circumferential flange part 61c of the case 61 and the distal end face 70b of the dust lip 70, and accordingly, no remarkable negative pressure is effected in the seal inner spaces S2, S8 under the above-mentioned air expelling action. Thus, it is possible to prevent the seal lip 62 and the dust lip 70 from being made into surface contact with the flange part 64b of the slinger 64 and the outer circumferential flange part 61c of the case 61 by a negative pressure, thereby it is possible to effectively prevent an increase in sliding load, and early abrasion of the seal lip 62 and the dust seal 70 caused thereby and the like.

Further, the above-mentioned air expelling action causes introduction of the outside air into the seal inner space S8 inside of the dust cover 6D through the unlimited number of labyrinth-like ventilation passages in the sliding portion between the end face 61 e of the outer circumferential flange part 61 c of the case 61 and the distal end face 70b of the dust lip 70. Since these ventilation passages are formed by a satin treatment so as to be fine and labyrinth-like, dust contained in the sucked air can hardly pass into the seal inner space S8. Further, even though dust is contained in the air flowing into the seal inner space S8, the dust is removed by the dust filter 68 during suction of air into the seal inner space S2 in the end face seal 6C. Thus, purified air alone is sucked into the seal inner space S2, thereby it is possible to prevent dust entering into engine oil in the crank chamber through the sliding portion between the flange part 64b of the slinger 64 and the seal lip 62.

## Claims

1. A lip type end-face sealing device, comprising: a pair of seal lips (62, 63) which are integrally provided on an annular case (61) fixed onto the inner circumferential surface (2a) of a housing (2), having an opening in a taper-fashion repelling against each other along the axial direction, a pair of slingers (64, 65) which are tightly fitted onto the outer circumference of a rotational axis (3) inserted into the inner circumference of said housing (2), and slidably brought into contact with said seal lips (62, 63) at flange parts (64b, 65b), and a ventilation passage, which releases pressure in the seal inner space (S2) between sliding parts of said both seal lips (62, 63) and said both slingers (64, 65), wherein said case (61) is composed of a pair of case members (611, 612), each case member (611, 612) is composed of a fitting cylindrical part (611 a, 612a), said first fitting cylindrical part (611 a) is press-fitted in the inner peripheral surface (2a) of the housing with a predetermined interference and an inner peripheral flange part (611 b) extending toward the inner circumference side, said second fitting cylindrical part (612a) is press-fitted in an inner peripheral surface of said first fitting cylindrical part (611a) of the first case member (611) in close contact condition and an inner circumferential flange part (612b) extending toward the inner circumference side and said first and second seal lips (62, 63) having proximal end parts (62a, 63a) which are integrally cured and bonded to said inner peripheral flange part (611 b, 612b) of said first and second case members (611, 612) wherein a ventilation space (S1) is defined between the inner flange parts (611b, 612b) and a fitting part of the fitting cylindrical part (611 a) of the first flange part (611) into which the fitting cylindrical part (612a) of the second flange part (612) is fitted, and said ventilation passage is formed in its inside with a ventilation hole (611 c) confronting the ventilation passage (S1).

2. The lip type end-face sealing device according to claim 1, where a case (61) is composed of a pair of case members (611, 612), and a ventilation passage is composed of a vent hole (22) opened on the inner circumferential surface (2a) of said housing (2) and a vent hole (611c), which is opened by facing in a space between said pair of case members (611, 612) on the fitting surface with said inner circumferential surface (2a) of said housing (2) in said case (61), and is communicated with said vent hole (22).

3. The lip type end-face sealing device according to claim 1, wherein on one side of slidable contact surfaces between said seal lips (62, 63) and said slingers (64, 65) a spiral groove (64c) which pumps to the outer circumference side as said slingers (64, 65) rotate is formed.

## Patentansprüche

1. Wellendichtring, umfassend: ein Paar Dichtlippen (62, 63), die integral an einer an der Innenumfangsfläche (2a) eines Gehäuses (2) befestigten ringförmigen Ummantelung (61) vorgesehen sind und eine entgegengesetzt zueinander in Axialrichtung konisch zulaufende Öffnung aufweisen, ein Paar Ölschleuderringe (64, 65), die eng am Außenumfang einer in den Innenumfang des Gehäuses (2) eingesetzten Drehachse (3) angebracht sind und verschiebbar mit den Dichtlippen (62, 63) an Flanschteilen (64b, 65b) in Kontakt gebracht werden, und einen Entlüftungsdurchgang, der Druck in dem Dichtungsinnenraum (S2) zwischen Gleitteilen der beiden Dichtlippen (62, 63) und den beiden Ölschleuderringen (64, 65) abbaut, wobei die Ummantelung (61) aus einem Paar Ummantelungsgliedern (611, 612) besteht, wobei jedes Ummantelungsglied (611, 612) aus einem zylindrischen Passteil (611a, 612a) besteht, wobei das erste zylindrische Passteil (611a) mit einer vorbestimmten Presspassung in der Innenumfangsfläche (2a) des Gehäuses eingepresst ist und sich ein Innenumfangsflanschteil (612b) zu der Innenumfangsseite erstreckt, wobei das zweite zylindrische Passteil (612a) in einer Innenumfangsseite des ersten zylindrischen Passteils (611a) des ersten Ummantelungsglieds (611) in einem Zustand engen Kontakts eingepresst ist und sich ein Innenumfangsflanschteil (612b) zu der Innenumfangsseite erstreckt und die erste und die zweite Dichtlippe (62, 63) proximale Endteile (62a, 63a) aufweisen, die integral ausgehärtet und mit dem Innenumfangsflanschteil (611b, 612b) des ersten und des zweiten Ummantelungsglieds (611, 612) verbunden sind, wobei ein Entlüftungsraum (S1) zwischen dem Innenflanschteil (611b, 612b) und einem Passteil des zylindrischen Passteils (611a) des ersten Flanschteils (611) definiert ist, in den das zylindrische Passteil (612a) des zweiten Flanschteils (612) eingepasst wird und der Entlüftungsdurchgang in seiner Innenseite mit einem Entlüftungsloch (611c) ausgebildet ist, das dem Entlüftungsdurchgang (S1) gegenüberliegt.

2. Wellendichtring nach Anspruch 1, wobei eine Ummantelung (61) aus einem Paar Ummantelungsgliedern (611, 612) besteht und ein Entlüftungsdurchgang aus einem Entlüftungsloch (22), das an der Innenumfangsfläche (2a) des Gehäuses (2) mündet, und einem Entlüftungsloch (611c), das zu einem Raum zwischen dem Paar Gehäusegliedern (611, 612) an der Passfläche mit der Innenumfangsfläche (2a) des Gehäuses (2) in der Ummantelung (61) weisend mündet und mit dem Entlüftungsloch (22) in Verbindung steht, besteht.

3. Wellendichtring nach Anspruch 1, wobei auf einer Seite der verschiebbaren Kontaktflächen zwischen den Dichtlippen (62, 63) und den Ölschleuderringen (64, 65) eine Spiralnut (64c) ausgebildet ist, die bei Drehung der Ölschleuderringe (64, 65) zur Außenumfangsseite pumpt.

## Revendications

1. Dispositif d'étanchéité de face d'extrémité du type à lèvre, comprenant : une paire de lèvres d'étanchéité (62, 63) qui sont prévues intégralement sur un corps annulaire (61) fixé sur la surface circonférentielle interne (2a) d'un boîtier (2), ayant une ouverture de forme conique, se repoussant mutuellement le long de la direction axiale, une paire d'élingueurs (64, 65) qui sont ajustés hermétiquement sur la circonférence externe d'un axe de rotation (3) inséré dans la circonférence interne dudit boîtier (2), et amenés par coulissement en contact avec lesdites lèvres d'étanchéité (62, 63) au niveau de parties de bride (64b, 65b), et un passage de ventilation qui libère la pression dans ledit espace interne (S2) entre des parties coulissantes desdites deux lèvres d'étanchéité (62, 63) et desdits deux élingueurs (64, 65), ledit corps (61) se composant d'une paire d'organes de corps (611, 612), chaque organe de corps (611, 612) se composant d'une partie cylindrique d'ajustement (611a, 612a), ladite première partie cylindrique d'ajustement (611a) étant ajustée par serrage dans la surface périphérique interne (2a) du boîtier avec une interférence prédéterminée et une partie de bride périphérique interne (611b) s'étendant vers le côté circonférentiel interne, ladite deuxième partie cylindrique d'ajustement (612a) étant ajustée par serrage dans une surface périphérique interne de ladite première partie cylindrique d'ajustement (611a) du premier organe de corps (611) dans un état de contact étroit et une partie de bride circonférentielle interne (612b) s'étendant vers le côté circonférentiel interne et lesdites première et deuxième lèvres d'étanchéité (62, 63) ayant des parties d'extrémité proximales (62a, 63a) qui sont intégralement durcies et liées à ladite partie de bride périphérique interne (611b, 612b) desdits premier et deuxième organes de corps (611, 612), un espace de ventilation (S1) étant défini entre la partie de bride interne (611b, 612b) et une partie d'ajustement de la partie cylindrique d'ajustement (611a) de la première partie de bride (611) dans laquelle la partie cylindrique d'ajustement (612a) de la deuxième partie de bride (612) est ajustée, et ledit passage de ventilation étant formé en son intérieur d'un trou de ventilation (611c) en face du passage de ventilation (S1).

2. Dispositif d'étanchéité de face d'extrémité du type à lèvre selon la revendication 1, dans lequel un corps (61) se compose d'une paire d'organes de corps (611, 612) et un passage de ventilation est composé d'un trou d'évent (22) ouvert sur la surface circonférentielle interne (2a) dudit boîtier (2) et d'un trou d'évent (611c), qui est ouvert en faisant face dans un espace entre ladite paire d'organes de corps (611, 612) sur la surface d'ajustement avec ladite surface circonférentielle interne (2a) dudit boîtier (2) dans ledit corps (61), et qui communique avec ledit trou d'évent (22).

3. Dispositif d'étanchéité de face d'extrémité du type à lèvre selon la revendication 1, dans lequel, sur un côté de surfaces de contact coulissantes entre lesdites lèvres d'étanchéité (62, 63) et lesdits élingueurs (64, 65), est formée une gorge spirale (64c) qui pompe vers le côté circonférentiel externe à mesure que lesdits élingueurs (64, 65) tournent.
